# EUROPÄISCHE PATENTSCHRIFT

(11) **EP 3 204 170 B1**
(45) Veröffentlichungstag und Bekanntmachung des Hinweises auf die Patenterteilung: **24.04.2019**
(21) Anmeldenummer: 15767177.7
(22) Anmeldetag: 24.09.2015
(51) Int. Cl.: B05C 9/14, B31B 50/00, B65H 29/66

(54) **VORRICHTUNG ZUR KÜHLUNG VON AUF EINER OBERFLÄCHE VON SACKKÖRPERN AUFGEBRACHTEM KLEBSTOFF**
DEVICE FOR COOLING OF ADHESIVE APPLIED TO THE SURFACE OF BAG BODIES
DISPOSITIF DE REFROIDISSEMENT D'ADHÉSIF APPLIQUÉ SUR UNE SURFACE DE CORPS DE SAC

(30) Priorität: 02.10.2014 EP 14187508
(43) Veröffentlichungstag der Anmeldung: 16.08.2017
(73) Patentinhaber: Starlinger & Co Gesellschaft m.b.H., 1060 Wien (AT)
(72) Erfinder: NEUMÜLLER, Norbert, A-2564 Weissenbach/Triesting (AT)
(74) Vertreter: Margotti, Herwig Franz
(86) Internationale Anmeldenummer: PCT/EP2015/071989
(87) Internationale Veröffentlichungsnummer: WO 2016/050602

(56) Entgegenhaltungen:
- WO-A2-2011/084727
- DE-A1-102009 056 078
- US-A- 2 032 503
- US-A- 4 231 558
- US-A- 5 849 358
- US-A1- 2002 114 889

## Beschreibung

Die Erfindung betrifft eine Vorrichtung zur Kühlung von auf einer Oberfläche von Sackkörpern aufgebrachtem Klebstoff, umfassend einen Transferförderer und einen Kühlförderer, wobei der Transferförderer Sackkörper mit einer Transfergeschwindigkeit zum Kühlförderer befördert und der Kühlförderer vom Transferförderer übernommene Sackkörper mit einer Kühlfördergeschwindigkeit befördert.

Der Markt verlangt immer häufiger nach hochwertig bedruckbaren stabilen Säcken für den Consumer Bereich. Besonders gefragt sind Seitenfaltensäcke, wie z.B. Pinch Bottom Säcke, aus Kunststoff insbesondere Kunststoffgewebe(-verbund), da dieses Material im Vergleich zu Säcken aus Papier eine sehr hohe Reißfestigkeit aufweist.

Besonders im Tierfutterbereich stellt austretendes Füllgut nicht nur ein Problem in Form von Verunreinigungen dar, sondern es werden auch Schädlinge angelockt, was zu Hygieneproblemen führen kann.

Die Herstellung von Seitenfaltenverpackungen aus Papier ist seit vielen Jahrzehnten bekannt. In der Praxis werden solche Verpackungen nach folgendem Verfahren hergestellt:
▪ Eine flache Papierbahn wird mit geraden oder gestuften Perforationslinien im Abstand der späteren Abschnittslänge versehen.
▪ Die flache Bahn wird zu einem Schlauch geformt und längs verklebt.
▪ Anschließend werden die Schlauchabschnitte durch Abreißen entlang der Perforationslinien getrennt.
▪ Ein Endbereich des abgerissenen Schlauchabschnitts wird zu einem Boden geformt und verklebt.

Die Konstruktion einer "Pinch Bottom-Verpackung" ist z.B. aus der US 4008850 A bekannt, wobei in diesem Dokument auch vorgeschlagen wird, kunststoffbeschichtetes Papier für das Bahnmaterial zu verwenden und Kunststoffbeschichtungsflächen zu verkleben.

Da die Nachfrage nach Pinch Bottom Säcken aus Kunststoff, insbesondere Kunststoffgewebe(-verbund), stetig ansteigt, steigen auch die Anforderungen an die Produktionsgeschwindigkeiten von Konfektionsanlagen für diese Säcke.

Ein Verfahren zur Herstellung von Pinch Bottom Säcken aus Kunststoff ist in der DE 102009056078 B4 beschrieben. Hier erfolgt die Konfektion der Säcke zumindest teilweise in Querrichtung zum Schlauchmaterial und der Pinch Boden wird mittels Wärmefügeverfahrens gebildet. Allerdings sind die Produktionsgeschwindigkeit und die Genauigkeit solcher Konfektionsanlagen durch eine erforderliche Eckumlenkung eingeschränkt.

Besonders hohe Produktionsgeschwindigkeiten werden von Konfektionsanlagen erreicht, in denen die Materialbahn bzw. der Materialschlauch und die Sackabschnitte während der Konfektion in Längsrichtung geführt werden.

Um den Sack beim späteren Abfüllprozess schnell und sauber verschließen zu können, wird bereits während der Konfektion der Säcke reaktivierbarer Klebstoff (z.B. Hot Melt) auf die offene Pinch Oberseite aufgetragen.

Damit die Säcke, die nach dem Herstellungsprozess gestapelt und palettiert werden, nicht zusammenkleben, muss der aufgetragene Klebstoff vollständig blockfrei, also nicht mehr klebrig, sein. Dazu wird bei der Verwendung eines Hot Melt Klebstoffes Abkühlung und Zeit benötigt.

Die Abkühlung und Zeit, die benötigt wird, bis der auf der offenen Pinch Oberseite aufgetragene Klebstoff blockfrei ist, stellen einen limitierenden Faktor für die Produktionsrate von Konfektionsanlagen dar. Ist der Klebstoff durch eine schnellere Produktion nicht vollständig blockfrei, kann es beim anschließendem Stapeln bzw. Palettieren zum Zusammenkleben der Säcke an den Pinch Oberseiten kommen. Dies führt zu erheblichen Schwierigkeiten beim Befüllen der Säcke in automatischen Abfüllanlagen.

Die Abkühlung von Hot Melt Klebstoffen kann durch Kühltrommeln, an deren Oberfläche die Säcke geführt werden, oder entlang sonstiger Kühlstrecken erfolgen. Kühltrommeln haben den Vorteil, dass der Klebstoff an der Kühltrommel anliegt und die Kühlenergie somit direkt übertragen werden kann.

Eine Möglichkeit die Produktivität der Sack-Konfektionsanlagen zu steigern, wäre die Rotationsgeschwindigkeit von Kühltrommeln zu erhöhen und die Temperatur des die Kühltrommel durchströmenden Kühlmittels zu senken. Dadurch könnte der Klebstoff auch bei einer kürzeren Umlaufzeit der Kühltrommel abgekühlt werden. Allerdings würde sich bei der Verwendung von Kühlmittel mit niedrigerer Temperatur Kondenswasser auf der Kühltrommel bilden. Da der Klebstoff nicht nur Abkühlung, sondern auch Zeit benötigt, um seine Blockfreiheit zu erreichen, kann nur durch eine schnellere Kühlung eine Blockfreiheit des Klebstoffes auf dem Sack direkt nach der Konfektion nicht garantiert werden.

Auch eine Erhöhung des Umfanges der Kühltrommel kann zu einer besseren Kühlleistung der Kühltrommel führen, dabei hätte der Klebstoff auch mehr Zeit, um seine Blockfreiheit zu erreichen. Allerdings würde sich der Einbau einer größeren Kühltrommel nachteilig auf den Platzbedarf der Konfektionsanlage auswirken.

In der WO 2013/109567 A1 wird eine Erfindung beschrieben, die das Zusammenkleben der hergestellten Pinch Bottom Säcke beim Stapeln oder Palettieren vermindert bzw. verhindern kann. Dazu wird der Klebstoff an der offenen Oberseite des Pinch Sackes mit einer speziellen Düse, welche mehrere Auslassöffnungen für den Klebstoff aufweist, aufgetragen, wodurch der Klebstoff in mehreren Streifen aufgetragen wird, sodass die Oberfläche des aufgetragenen Klebstoffes nicht gleichmäßig ist, sondern Erhöhungen und Vertiefungen aufweist. Es wird auch eine Variante beschrieben, bei der der Klebstoff in Form eines "fiberized overspray" aufgetragen wird. Insgesamt wird dadurch die Klebstoffoberfläche, mit der ein Sack im Stapel am nächsten Sack anliegt, reduziert und auch die Gefahr des Zusammenklebens der Säcke vermindert. Allerdings wird in diesem Dokument nicht darauf eingegangen, wie eine höhere Produktionsrate von Pinch Bottom Säcken mit reaktivierbarem Klebstoff an der offenen Pinch Oberseite erreicht und Blockfreiheit direkt nach der Herstellung garantiert werden kann.

Es ist daher eine Aufgabe der Erfindung, Pinch Bottom Säcke (z.B. aus Kunststoffgewebeverbund) mit reaktivierbarem Klebstoff an der offenen Pinch Oberseite bei hoher Produktionsrate herzustellen, wobei die Säcke bereits unmittelbar nach der Konfektion blockfrei sind, um beim Stapeln und Palettieren nicht zusammenzukleben.

Die Erfindung löst diese Aufgabe durch Bereitstellen einer Vorrichtung zur Kühlung von auf einer Oberfläche von Sackkörpern aufgebrachtem Klebstoff, umfassend einen Transferförderer und einen Kühlförderer, wobei der Transferförderer Sackkörper mit einer Transfergeschwindigkeit zum Kühlförderer befördert und der Kühlförderer vom Transferförderer übernommene Sackkörper mit einer Kühlfördergeschwindigkeit befördert. Erfindungsgemäß ist die Transfergeschwindigkeit höher als die Kühlfördergeschwindigkeit, wodurch die stromaufwärts vom Kühlförderer mit der Transfergeschwindigkeit in der Sack-Konfektionsanlage bewegten Sackkörper am Kühlförderer teilweise übereinanderliegend, sozusagen "geschuppt" angeordnet, zusammengeschoben werden, wobei der reaktivierbare (z.B. Hot Melt) Klebstoff, der an einer Oberfläche der Sackkörper aufgebracht wurde, an dem Kühlförderer anliegt. Durch die geringere Kühlfördergeschwindigkeit in Verbindung mit der teilweise übereinanderliegenden Anordnung der Sackkörper erreicht man eine lange Verweilzeit der Sackkörper am Kühlförderer, wodurch der Klebstoff auch bei höherer Produktionsrate, d.h. hoher Transfergeschwindigkeit, ausreichend Zeit zum Abkühlen hat und die Sackkörper am Ausgang des Kühlförderers bereits blockfrei sind.

Weitere vorteilhafte Ausgestaltungen der Erfindung sind in den Unteransprüchen und der nachfolgenden Beschreibung erläutert.

Um eine saubere Klebstoffaufbringung zu erzielen und zu vermeiden, dass Klebstoff die Sack-Konfektionieranlage verschmutzt, ist es günstig, wenn eine Klebstoffübertragungseinheit vorgesehen ist, die Klebstoff auf eine freiliegende Oberfläche von auf dem Transferförderer geförderten Sackkörpern aufbringt. Die Klebstoffübertragungseinheit kann den Klebstoff von einer Klebstoffauftragseinheit erhalten.

Damit der Klebstoff ausreichend gekühlt wird, ist bevorzugt vorgesehen, dass der Kühlförderer die Sackkörper mit dem Klebstoff gegen eine gekühlte Fläche des Kühlförderers anliegend befördert. Die Kühlwirkung, d.h. Temperaturübertragung, kann noch weiter gefördert werden, wenn eine Anpresseinrichtung vorgesehen ist, die die Sackkörper gegen den Kühlförderer anpresst, wodurch die Sackkörper gleichzeitig gegen Verrutschen gesichert werden. Eine platzsparende, aber sehr verlässliche Anpresseinrichtung weist zumindest einen dem Kühlförderer gegenüberliegenden Endlosriemen auf, der sich synchron mit dem Kühlförderer bewegt. Um das Übereinanderschieben aufeinanderfolgender Sackkörper zu erleichtern, kann zwischen dem Kühlförderer und der Anpresseinrichtung in einem Einlaufbereich ein Spalt ausgebildet sein, der sich vorzugsweise in Förderrichtung verjüngt. Das Übereinanderschieben (d.h. die "Schuppen"-Anordnung) aufeinanderfolgender Sackkörper geht noch leichter vonstatten, wenn die Anpresseinrichtung im Einlaufbereich federnd gelagert ist.

Um sicher zu stellen, dass ein nachfolgender Sackkörper nicht zwischen den vorhergehenden Sackkörper und den Kühlförderer, sondern über den vorangegangenen Sackkörper geschoben wird, können zwischen dem Transferförderer und dem Kühlförderer Sackkörper-Führungsmittel, insbesondere zumindest ein Einlaufleitblech, angeordnet sein. Um das Weitertransportieren oder Stapeln von fertig konfektionierten Sackkörpern am Ausgang des Kühlförderers verlässlich zu gestalten, kann am Ausgang zumindest ein Auslaufleitblech angeordnet sein.

Um ein Verrutschen der Sackkörper während ihrer Beförderung auf dem Transferförderer bzw. dem Kühlförderer zu verhindern, ist/sind in einer bevorzugten Ausführungsform der Erfindung der Transferförderer und/oder der Kühlförderer mit Sackkörper-Haltemitteln versehen, wobei die Sackkörper-Haltemittel vorzugsweise als Greifer und/oder Vakuumsauger ausgebildet sind.

In einer bevorzugten, kontinuierlich bewegbaren, platzsparenden und mittels Kühlmittel gut kühlbaren Ausführungsform der erfindungsgemäßen Vorrichtung ist der Kühlförderer als Kühltrommel ausgebildet, deren Mantelfläche die Kühlfläche bildet.

Durch eine raue Kühlfläche des Kühlförderers kann die Grenzfläche zwischen Kühlfläche und Oberfläche des Klebstoffes erhöht werden. Durch die Einprägung der rauen Kühlfläche in den Klebstoff vergrößert sich auch die Oberfläche des Klebstoffes, womit eine Erhöhung der Kühlleistung erzielt wird und auch die Kühlung von dickeren Klebstoffschichten ermöglicht wird.

In einer bevorzugten, kontinuierlich bewegbaren und platzsparenden Ausführungsform der erfindungsgemäßen Vorrichtung ist der Transferförderer als Transfertrommel ausgebildet.

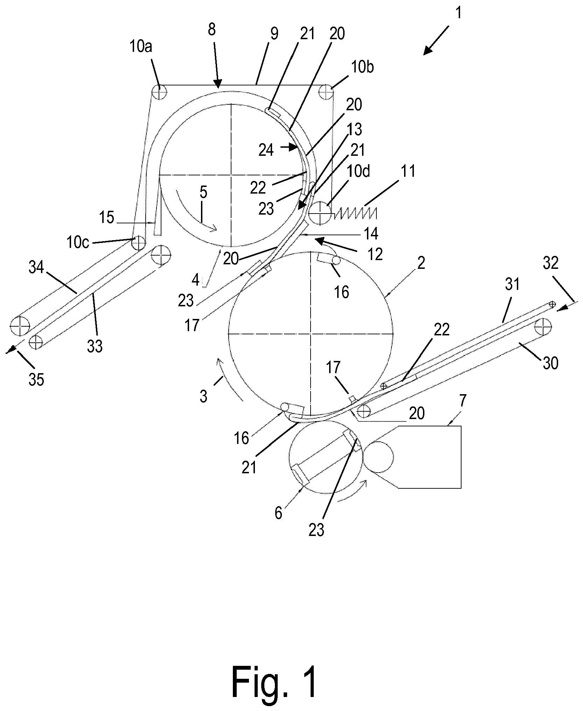

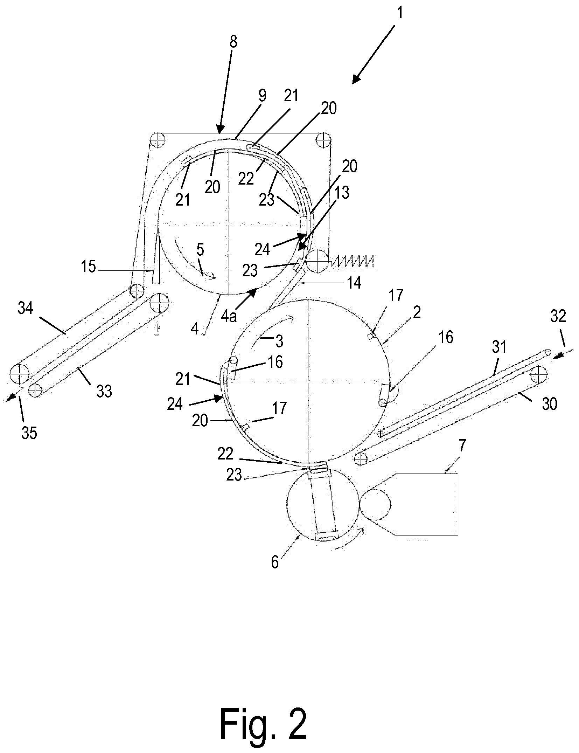

Die Erfindung wird nachfolgend unter Bezugnahme auf die Figuren 1 und 2 näher beschrieben, die eine Ausführungsform der erfindungsgemäßen Kühlvorrichtung zu verschiedenen Betriebszeitpunkten in schematischer Seitenansicht zeigen.

Bei der Konfektion von Pinch Bottom Säcken werden an aus längs zusammengeklebten Flachbahnen oder aus Schlauchgewebe gebildeten Schlauchabschnitten Seitenfalten gebildet. Danach wird an einem Ende der Schlauchabschnitte, dem so genannten "factory end" 21, das beim befüllten Sack das untere Ende und somit den Boden darstellt, ein Pinch Boden geformt, indem das Schlauchende entlang einer Faltlinie um 180° umgeschlagen und mit der Schlauchwand verbunden/verklebt wird. Bei dem solcherart hergestellten Sackkörper 20 erfolgt anschließend der Auftrag eines reaktivierbaren Klebstoffes 23 an einer Sackkörperoberfläche 24 nahe dem offenen Ende des Sackkörpers 20. Dieses offene Ende wird "customer end" 22 genannt und bleibt bei der Auslieferung der Sackkörper an einen Kunden offen. Der Kunde befüllt den Sackkörper mit einem Produkt, zumeist ein Schüttgut, wie z.B. Tierfutter, und verschließt nach dem Befüllen den Sack durch Reaktivierung des Klebstoffes 23 und Umschlagen des offenen Endes des Sackkörpers 20 auf den Klebstoff 23. Danach kann der befüllte Pinch Bottom Sack in die Geschäfte ausgeliefert werden.

Die in den Figuren 1 und 2 dargestellte Vorrichtung 1 stellt einen Teil einer Sack-Konfektionieranlage dar, bei der die an ihrem "factory end" 21 schon verschlossenen Sackkörper 20 von stromaufwärts angeordneten Stationen der Sack-Konfektionieranlage entlang des Pfeils 32 zu einem Eingangsförderer 30 gelangen und zwischen dem Eingangsförderer und einer Anpresseinrichtung 31 zu einem Transferförderer 2 in Form einer Transfertrommel befördert, vom Transferförderer 2 mittels Greifern 16 und Vakuumsaugern 17 übernommen, an der Mantelfläche des trommelförmigen Transferförderers gehalten und mit einer Transfergeschwindigkeit (Pfeil 3) bewegt werden. Es sei erwähnt, dass auch der Eingangsförderer 30 eine Fördergeschwindigkeit aufweist, die gleich der Transfergeschwindigkeit 3 ist. Wie aus den Zeichnungen ersichtlich, ist das "factory end" 21 das führende Ende der Sackkörper 20 auf dem Transferförderer 2 und das "customer end" 22 das hintere Ende.

Am Weg der Sackkörper 20 auf dem Transferförderer 2 ist eine drehzylinderförmige Klebstoffübertragungseinheit 6 angeordnet, die Klebstoff 23 nahe des "customer end" 22 auf eine freiliegende Oberfläche 24 der von auf dem Transferförderer 2 geförderten Sackkörper 20 aufbringt. Die Klebstoffübertragungseinheit 6 erhält den Klebstoff 23 von einer Klebstoffauftragseinheit 7. Nach dem Aufbringen des Klebstoffes 23 auf den Sackkörper 20 wird dieser zu einem Kühlförderer 4 geführt und in einem Einlaufbereich 12 mithilfe von Leitblechen 14 in einen Spalt 13 zwischen dem Kühlförderer 4 und einer Anpresseinrichtung 8 übergeben. Der Kühlförderer 4 ist als Kühltrommel ausgebildet und weist eine durch ein nicht dargestelltes Kühlmittel gekühlte Mantelfläche auf, die als Kühlfläche 4a dient. Wie aus den Zeichnungen ersichtlich, wird bereits ein vorhergehender Sackkörper 20 im Spalt zwischen dem Kühlförderer 4 und der Anpresseinrichtung 8 mit einer Kühlfördergeschwindigkeit (Pfeil 5) befördert, wobei die Oberfläche 24 des Sackkörpers 20, auf der sich der Klebstoff 23 befindet, der Kühlfläche 4a zugewandt ist, die zur Erhöhung der Grenzfläche zum Klebstoff 23 rau ausgebildet ist. Die Anpresseinrichtung 8 weist mehrere über die Breite der Sackkörper 20 verteilte Endlosriemen 9 auf (in der Seitenansicht der Figuren 1 und 2 ist nur ein Endlosriemen 9 zu sehen), die die Sackkörper 20 gegen die Kühlfläche 4a pressen. Die Endlosriemen 9 sind über mehrere Umlenkrollen 10a, 10b, 10c, 10d umgelenkt und bewegen sich synchron, d.h. ebenfalls mit Kühlfördergeschwindigkeit, mit dem Kühlförderer 4. Dabei können die Umlenkrollen freilaufende Rollen sein und die Endlosriemen 9 von der Kühlfläche 4a des Kühlförderers 4 oder von den Sackkörpern 20 mitgezogen werden, oder - alternativ dazu - kann zumindest eine Umlenkrolle eine angetriebene Rolle sein.

Bei der Übergabe der Sackkörper 20 vom Transferförderer 2 an den Kühlförderer 4 unter Führung durch die Leitbleche 14 werden am Transferförderer 2 die Greifer 16 gelöst und die Vakuumsauger 17 abgeschaltet. Da die Transfergeschwindigkeit 3 höher ist als die Kühlfördergeschwindigkeit 5 schiebt sich bei der Übergabe das führende Ende des nachfolgenden Sackkörpers 20 über das hintere Ende des vorhergehenden Sackkörpers 20, wodurch sich die beiden Sackkörper teilweise überlappen. Es entsteht eine "Schuppen-Anordnung". Um den Überlappungsvorgang zu erleichtern, ist im Einlaufbereich 12 die Umlenkrolle 10d mittels einer Feder 11 beweglich gelagert.

Nach der Übergabe der Sackkörper 20 an den Kühlförderer 4 werden die Sackkörper 20 in Schuppen-Anordnung mit der langsamen Kühlfördergeschwindigkeit 5 befördert und haben dadurch eine lange Verweilzeit mit ihrem Klebstoff 23 an der Kühlfläche 4a. Da die Packungsdichte der Sackkörper 20 im Kühlförderer 4 wesentlich höher ist als in den vorangegangenen Stationen der Sack-Konfektionieranlage, durch die die Sackkörper mit der Transfergeschwindigkeit bewegt worden waren, wird dennoch ein hoher Durchsatz an Sackkörpern 20 erreicht. Am Ausgang des Kühlförderers 4 ist ein Auslaufleitblech 15 angeordnet, mit dem die gekühlten Sackkörper 20 zwischen einen Ausgangsförderer 33 und eine Anpresseinrichtung 34 geführt und dann in Richtung 35 zur Stapelung und anschließenden Palettierung abgegeben werden.

## Patentansprüche

1. Vorrichtung (1) zur Kühlung von auf einer Oberfläche (24) von Sackkörpern (20) aufgebrachtem Klebstoff (23), umfassend einen Transferförderer (2) und einen Kühlförderer (4), wobei der Transferförderer (2) die Sackkörper (20) mit einer Transfergeschwindigkeit (3) zum Kühlförderer (4) befördert und der Kühlförderer (4) vom Transferförderer (2) übernommene Sackkörper (20) mit einer Kühlfördergeschwindigkeit (5) befördert, **dadurch gekennzeichnet, dass** die Transfergeschwindigkeit (3) höher ist als die Kühlfördergeschwindigkeit (5), wobei der Kühlförderer (4) eine gekühlte Kühlfläche (4a) aufweist, die der mit Klebstoff (23) versehenen Oberfläche (24) der geförderten Sackkörper (20) zugewandt ist, wobei der Kühlförderer (4) als Kühltrommel ausgebildet ist, deren Mantelfläche die gekühlte Kühlfläche (4a) bildet und wobei sowohl der Transferförderer (2) als auch der Kühlförderer (4) adaptiert sind, die Sackkörper (20) entlang ihren Längsachsen in Förderrichtung zu befördern.

2. Vorrichtung nach Anspruch 1, **gekennzeichnet durch** eine Klebstoffübertragungseinheit (6), die Klebstoff (23) auf eine freiliegende Oberfläche (24) von auf dem Transferförderer (2) geförderten Sackkörpern (20) aufbringt, wobei die Klebstoffübertragungseinheit (6) vorzugsweise als Drehzylinder ausgebildet ist.

3. Vorrichtung nach Anspruch 2, **gekennzeichnet durch** eine Klebstoffauftragseinheit (7), die Klebstoff auf die Klebstoffübertragungseinheit (6) aufträgt.

4. Vorrichtung nach einem der vorhergehenden Ansprüche, **gekennzeichnet durch** eine Anpresseinrichtung (8), die die Sackkörper gegen den Kühlförderer anpresst.

5. Vorrichtung nach Anspruch 4, **dadurch gekennzeichnet, dass** die Anpresseinrichtung (8) zumindest einen dem Kühlförderer gegenüberliegenden Endlosriemen (9) aufweist, der sich synchron mit dem Kühlförderer (4) bewegt.

6. Vorrichtung nach Anspruch 4 oder 5, **dadurch gekennzeichnet, dass** zwischen dem Kühlförderer (4) und der Anpresseinrichtung (8) in einem Einlaufbereich (12) ein Spalt (13) ausgebildet ist, der sich vorzugsweise in Förderrichtung verjüngt, wobei bevorzugt die Anpresseinrichtung im Einlaufbereich federnd (11) gelagert ist.

7. Vorrichtung nach einem der vorhergehenden Ansprüche, **dadurch gekennzeichnet, dass** zwischen dem Transferförderer und dem Kühlförderer Sackkörper-Führungsmittel, insbesondere zumindest ein Einlaufleitblech (14), angeordnet sind.

8. Vorrichtung nach einem der vorhergehenden Ansprüche, **dadurch gekennzeichnet, dass** am Ausgang des Kühlförderers zumindest ein Auslaufleitblech (15) angeordnet ist.

9. Vorrichtung nach einem der vorhergehenden Ansprüche, **dadurch gekennzeichnet, dass** der Transferförderer und/oder der Kühlförderer Sackkörper-Haltemittel aufweisen, wobei die Sackkörper-Haltemittel vorzugsweise als Greifer (16) und/oder Vakuumsauger (17) ausgebildet sind.

10. Vorrichtung nach einem der vorhergehenden Ansprüche, **dadurch gekennzeichnet, dass** der Kühlförderer eine raue Kühlfläche (4a) aufweist.

11. Vorrichtung nach einem der vorhergehenden Ansprüche, **dadurch gekennzeichnet, dass** der Transferförderer (2) als Transfertrommel ausgebildet ist.

12. Verfahren zur Kühlung von auf einer Oberfläche (24) von Sackkörpern (20) aufgebrachtem Klebstoff (23), umfassend das Befördern der Sackkörper (20) auf einem Transferförderer (2) mit einer Transfergeschwindigkeit (3), das Übergeben der Sackkörper (20) an einen Kühlförderer (4) und Befördern der Sackkörper (20) auf dem Kühlförderer (4) mit einer Kühlfördergeschwindigkeit (5), wobei die Sackkörper (20) während ihrer Beförderung auf dem Kühlförderer (4) gekühlt werden, **dadurch gekennzeichnet, dass** die Transfergeschwindigkeit (3) höher ist als die Kühlfördergeschwindigkeit (5), wobei der Kühlförderer (4) als Kühltrommel ausgebildet ist und die Sackkörper mit dem Klebstoff (23) gegen eine gekühlte Kühlfläche (4a) der Kühltrommel anliegend befördert und wobei die Sackkörper (20) sowohl auf dem Transferförderer (2) als auch auf dem Kühlförderer (2) mit ihren Längsachsen in Förderrichtung befördert werden.

13. Verfahren nach Anspruch 12, **dadurch gekennzeichnet, dass** Klebstoff (23) auf eine freiliegende Oberfläche (24) der Sackkörper (20) aufgebracht wird, während die Sackkörper (20) auf dem Transferförderer (2) gefördert werden, wobei vorzugsweise der Klebstoff (23) mittels einer als Drehzylinder ausgebildeten Klebstoffübertragungseinheit (6) aufgebracht wird.

14. Verfahren nach Anspruch 12 oder 13, **dadurch gekennzeichnet, dass** die Sackkörper während ihrer Beförderung auf dem Kühlförderer gegen den Kühlförderer angepresst werden.

15. Verfahren nach einem der Ansprüche 12 bis 14, **dadurch gekennzeichnet, dass** die Sackkörper (20) während ihrer Beförderung auf dem Transferförderer und/oder dem Kühlförderer von Sackkörper-Haltemitteln gehalten werden, die vorzugsweise als Greifer (16) und/oder Vakuumsauger (17) ausgebildet sind.

16. Verfahren nach einem der Ansprüche 12 bis 15, **dadurch gekennzeichnet, dass** die Sackkörper (20) auf dem Kühlförderer einander teilweise überlappend befördert werden.

## Claims

1. A device (1) for cooling an adhesive (23) applied to a surface (24) of bag bodies (20), including a transfer conveyor (2) and a cooling conveyor (4), wherein the transfer conveyor (2) conveys the bag bodies (20) at a transfer speed (3) to the cooling conveyor (4) and wherein the cooling conveyor (4) conveys bag bodies (20) taken over from the transfer conveyor (2) at a cooling conveyor speed (5), **characterized in that** the transfer speed (3) is higher than the cooling conveyor speed (5), wherein the cooling conveyor (4) has a cooled cooling surface (4a), which faces the surface (24) of the conveyed bag bodies (20) provided with adhesive (23), wherein the cooling conveyor (4) is embodied as a cooling drum, the shell surface of which forming the cooled cooling surface (4a), and wherein the transfer conveyor (2) as well as the cooling conveyor (4) are adapted to convey the bag bodies (20) along the longitudinal axes thereof in the conveying direction.

2. The device according to claim 1, **characterized by** an adhesive transfer unit (6), which applies adhesive (23) onto an exposed surface (24) of bag bodies (20) being conveyed on the transfer conveyor (2), wherein the adhesive transfer unit (6) is preferably embodied as a rotary cylinder.

3. The device according to claim 2, **characterized by** an adhesive application unit (7), which applies adhesive onto the adhesive transfer unit (6).

4. The device according to any of the preceding claims, **characterized by** a pressing device (8), which presses the bag bodies against the cooling conveyor.

5. The device according to claim 4, **characterized in that** the pressing device (8) has at least one endless belt (9) opposite to the cooling conveyor, which moves synchronously with the cooling conveyor (4).

6. The device according to claim 4 or 5, **characterized in that** there is formed a gap (13) between the cooling conveyor (4) and the pressing device (8) in an inlet area (12), which is tapered preferably in the conveying direction, wherein the pressing device is preferably spring-mounted (11) in the inlet area.

7. The device according to any of the preceding claims, **characterized in that** there are arranged between the transfer conveyor and the cooling conveyor bag body guiding means, in particular at least one metal inlet guiding plate (14).

8. The device according to any of the preceding claims, **characterized in that** there is arranged at the exit of the cooling conveyor at least one metal outlet guiding plate (15).

9. The device according to any of the preceding claims, **characterized in that** the transfer conveyor and/or the cooling conveyor have bag body holding means, wherein the bag body holding means are embodied preferably as graspers (16) and/or vacuum exhausters (17).

10. The device according to any of the preceding claims, **characterized in that** the cooling conveyor has a coarse cooling surface (4a).

11. The device according to any of the preceding claims, **characterized in that** the transfer conveyor (2) is embodied as a transfer drum.

12. A process for cooling adhesive (23) applied to a surface (24) of bag bodies (20), including conveying the bag bodies (20) on a transfer conveyor (2) at a transfer speed (3), transferring the bag bodies (20) to a cooling conveyor (4) and conveying the bag bodies (20) on the cooling conveyor (4) at a cooling conveyor speed (5), wherein the bag bodies (20) are cooled during the conveyance thereof on the cooling conveyor (4), **characterized in that** the transfer speed (3) is higher than the cooling conveyor speed (5), wherein the cooling conveyor (4) is embodied as a cooling drum and conveys the bag bodies with the adhesive (23) resting against a cooled cooling surface (4a) of the cooling drum, and wherein the bag bodies (20) are conveyed with the longitudinal axes thereof in the conveying direction on the transfer conveyor (2) as well as on the cooling conveyor (4).

13. The process according to claim 12, **characterized in that** adhesive (23) is applied onto an exposed surface (24) of the bag bodies (20), whereas the bag bodies (20) are conveyed on the transfer conveyor (2), wherein preferably the adhesive (23) is applied by means of an adhesive transfer unit (6) embodied as a rotary cylinder.

14. The process according to any of claims 12 or 13, **characterized in that** the bag bodies are pressed against the cooling conveyor during the conveyance thereof on the cooling conveyor.

15. The process according to any of claims 12 to 14, **characterized in that** the bag bodies (20) are held during the conveyance thereof on the transfer conveyor and/or the cooling conveyor by bag body holding means, which are embodied preferably as graspers (16) and/or vacuum exhausters (17).

16. The process according to any of claims 12 to 15, **characterized in that** the bag bodies (20) are conveyed on the cooling conveyor in part overlapping each other.

## Revendications

1. Dispositif (1) destiné à refroidir un adhésif (23) appliqué sur une surface (24) de corps de sac (20), comportant un convoyeur de transfert (2) et un convoyeur de refroidissement (4), dans lequel le convoyeur de transfert (2) transporte les corps de sacs (20) à une vitesse de transfert (3) en direction du convoyeur de refroidissement (4) et le convoyeur de refroidissement (4) transporte les corps de sacs (20) réceptionnés par le convoyeur de transfert (2) à une vitesse de convoyeur de refroidissement (5), **caractérisé en ce que** la vitesse de transfert (3) est supérieure à la vitesse de convoyeur de refroidissement (5), dans lequel le convoyeur de refroidissement (4) présente une surface de refroidissement refroidie (4a), qui est tournée vers la surface (24), pourvue d'un adhésif (23), des corps de sacs (20) transportés, dans lequel le convoyeur de refroidissement (4) est réalisé sous la forme d'un tambour de refroidissement dont la surface extérieure forme la surface de refroidissement refroidie (4a), et dans lequel aussi bien le convoyeur de transfert (2) que le convoyeur de refroidissement (4) sont adaptés à transporter les corps de sacs (20) le long des axes longitudinaux de ceux-ci dans le sens de transport.

2. Dispositif selon la revendication 1, **caractérisé par** une unité de transfert d'adhésif (6), qui applique l'adhésif (23) sur une surface (24) à découvert des corps de sacs (20) transportés sur le convoyeur de transfert (2), dans lequel l'unité de transfert d'adhésif (6) est réalisée de préférence sous la forme d'un cylindre rotatif.

3. Dispositif selon la revendication 2, **caractérisé par** une unité d'application d'adhésif (7), qui applique un adhésif sur l'unité de transfert d'adhésif (6).

4. Dispositif selon l'une quelconque des revendications précédentes, **caractérisé par** un dispositif de pression (8), qui presse les corps de sacs contre le convoyeur de refroidissement.

5. Dispositif selon la revendication 4, **caractérisé en ce que** le dispositif de pression (8) comprend au moins une courroie sans fin (8) qui est opposée au convoyeur de refroidissement et qui se déplace de manière synchronisée avec le convoyeur de refroidissement (4).

6. Dispositif selon la revendication 4 ou 5, **caractérisé en ce qu'**une fente (13) qui se rétrécit de préférence dans le sens de transport est formée entre le convoyeur de refroidissement (4) et le dispositif de pression (8) dans une zone d'entrée (12), dans lequel le dispositif de pression est de préférence monté de manière élastique (11) dans la zone d'entrée.

7. Dispositif selon l'une quelconque des revendications précédentes, **caractérisé en ce que** des moyens de guidage de corps de sacs, en particulier au moins une tôle de guidage d'entrée (14), sont agencés entre le convoyeur de transfert et le convoyeur de refroidissement.

8. Dispositif selon l'une quelconque des revendications précédentes, **caractérisé en ce qu'**au moins une tôle de guidage de sortie (15) est agencée à la sortie du convoyeur de refroidissement.

9. Dispositif selon l'une quelconque des revendications précédentes, **caractérisé en ce que** le convoyeur de transfert et/ou le convoyeur de refroidissement comprennent des moyens de retenue de corps de sacs, dans lequel les moyens de retenue de corps de sacs sont réalisés de préférence sous la forme de pinces (16) et/ou de ventouses (17).

10. Dispositif selon l'une quelconque des revendications précédentes, **caractérisé en ce que** le convoyeur de refroidissement présente une surface de refroidissement (4a) rugueuse.

11. Dispositif selon l'une quelconque des revendications précédentes, **caractérisé en ce que** le convoyeur de transfert (2) est réalisé sous la forme d'un tambour de transfert.

12. Procédé de refroidissement d'un adhésif (23) appliqué sur une surface (24) de corps de sacs (20), comportant le transport des corps de sacs (20) sur un convoyeur de transfert (2) à une vitesse de transfert (3), la remise des corps de sacs (20) sur un convoyeur de refroidissement (4) et le transport des corps de sacs (20) sur le convoyeur de refroidissement (4) à une vitesse de convoyeur de refroidissement (5), dans lequel les corps de sacs (20) sont refroidis pendant leur transport sur le convoyeur de refroidissement (4), **caractérisé en ce que** la vitesse de transfert (3) est supérieure à la vitesse de convoyeur de refroidissement (5), dans lequel le convoyeur de refroidissement (4) est réalisé sous la forme d'un tambour de refroidissement et les corps de sacs pourvus de l'adhésif (23) sont transportés en étant appliqués contre une surface de refroidissement refroidie (4a) du tambour de refroidissement et dans lequel les corps de sacs (20) sont transportés aussi bien sur le convoyeur de transfert (2) que sur le convoyeur de refroidissement (4) avec leurs axes longitudinaux dans le sens de transport.

13. Procédé selon la revendication 12, **caractérisé en ce que** l'adhésif (23) est appliqué sur une surface (24) mise à découvert des corps de sacs (20), pendant que les corps de sacs (20) sont transportés sur le convoyeur de transfert (2), dans lequel l'adhésif (23) est appliqué de préférence au moyen d'une unité de transfert d'adhésif (6) réalisée sous la forme d'un cylindre rotatif.

14. Procédé selon la revendication 12 ou 13, **caractérisé en ce que** les corps de sacs +sont pressés contre le convoyeur de refroidissement pendant leur transport sur le convoyeur de refroidissement.

15. Procédé selon l'une quelconque des revendications 12 à 14, **caractérisé en ce que** les corps de sacs (20) sont retenus pendant leur transport sur le convoyeur de transfert et/ou le convoyeur de refroidissement par des moyens de retenue de corps de sacs, qui sont réalisés de préférence sous la forme de pinces (16) et/ou de ventouses (17).

16. Procédé selon l'une quelconque des revendications 12 à 15, **caractérisé en ce que** les corps de sacs (20) sont transportés de manière à se chevaucher en partie sur le convoyeur de refroidissement.
